# EUROPÄISCHE PATENTANMELDUNG

(11) **EP 0 897 834 A1**
(43) Veröffentlichungstag der Anmeldung: **24.02.1999**
(21) Anmeldenummer: 98114182.3
(22) Anmeldetag: 29.07.1998
(51) Int. Cl.: B60R 16/02, B60N 2/02

(54) **Sitzverstelleinrichtung**

(30) Priorität: 16.08.1997 DE 19735504
(71) Anmelder: Magna Sitzsysteme GmbH, 63741 Aschaffenburg (DE)
(72) Erfinder: Mack, John, 80802 München (DE)
(74) Vertreter: Fuchs Mehler Weiss & Fritzsche

(57) **Zusammenfassung**

Zur Veränderung der Positionen eines in einem Fahrzeug angeordneten Sitzes wird eine Einrichtung mit einer Eingabeeinheit, einer elektronischen Steuervorrichtung sowie mit einem oder mehreren Stellantrieben vorgesehen, wobei die eingegebenen Befehle von der Steuervorrichtung in Ansteuersignale für die Stellantriebe umgewandelt werden.

Zur weiteren Verbesserung und Vereinfachung einer derartigen Einrichtung wird vorgeschlagen, daß die Eingabeeinheit ein Mikrophon ist und daß die Steuervorrichtung ein Programm zur Erkennung und Verarbeitung akustischer Signale umfaßt.

## Beschreibung

Die Erfindung betrifft eine Einrichtung zur Veränderung der Positionen eines in einem Fahrzeug angeordneten Sitzes mit einer Eingabeeinheit, einer elektronischen Steuervorrichtung sowie mit einem oder mehreren Stellantrieben, wobei die eingegebenen Befehle von der Steuervorrichtung in Ansteuersignale für die Stellantriebe umgewandelt werden.

Moderne Kraftfahrzeugsitze weisen zumindest einige der nachfolgend beschriebenen Verstellmöglichkeiten auf:

Verschieben des Fahrzeugsitzes in Fahrzeuglängsrichtung, Höhenverstellung des Fahrzeugsitzes, Verschwenken der Rückenlehne um eine Achse quer zur Fahrzeuglängsrichtung. Änderung der Kontur der Rückenlehne.

In der Mehrzahl der Fälle sind dabei bisher noch rein mechanische Verstelleinrichtungen gebräuchlich, bei denen zunächst von Hand eine Verriegelung gelöst werden muß , bevor eine Positionsänderung vorgenommen werden kann. Dabei werden vielfach pneumatische Energiespeicher oder mechanische Federn benutzt, um Hilfskräfte für die Sitzverstellung bereitzustellen. In zunehmendem Maße werden jedoch auch elektromotorische Stellantriebe verwendet, die über Knopfdruck ansteuerbar sind, um die gewünschte Sitzstellung zu erreichen. Dabei ist die Bedienungsperson Teil eines Regelkreises, in dem die Positionsänderung beendet wird, wenn die gewünschte Sollstellung erreicht worden ist.

Für die inzwischen ebenfalls schon angebotenen Memory-Systeme sind neben den Stellantrieben auch noch Positionsgeber erforderlich, weil hierbei zwei oder mehrere unterschiedliche Sitzpositionen in Form digitaler Daten in einer elektronischen Steuervorrichtung abgespeichert sind, die auf Knopfdruck abgerufen werden können und dann zu einer Einstellung des Sitzes mittels der Stellantriebe in die vorgegebene Position führen, die dabei selbstverständlich über die Positionsgeber festgestellt werden muß. Derartige Systeme erfordern jedoch neben der Eingabeeinheit für das Aufrufen der Memory-Position noch eine Eingabeeinheit für alle Stellantriebe, damit neue Sitzpositionen einstellbar und abspeicherbar sind.

Der Erfindung liegt die Aufgabe zugrunde, eine Einrichtung der eingangs genannten Art weiter zu entwickeln und zu vereinfachen, damit die Veränderung der Positionen eines in einem Fahrzeug angeordneten Sitzes für den Benutzer noch bequemer wird.

Zur Lösung dieser Aufgabe wird vorgeschlagen, daß als Eingabeeinheit ein Mikrophon benutzt wird und daß die Steuervorrichtung ein Programm zur Erkennung und Verarbeitung akustischer Signale umfaßt.

Nachdem man auf anderen technischen Gebieten das Problem der Spracherkennung und der Umsetzung des gesprochenen Wortes in ein geschriebenes Wort bereits vielversprechende Lösungen gefunden hat, geht die Erfindung davon aus, daß es ohne weiteres möglich ist, die zur Veränderung der Positionen eines in einem Fahrzeug angeordneten Sitzes erforderlichen Befehle über akustische Signale einzugeben und in entsprechende Ansteuersignale für die Stellantriebe umzuwandeln. Damit erübrigen sich alle manuell zu betätigenden Eingabeeinheiten und die Positionsgeber, weil nunmehr wieder die Bedienungsperson Teil des Regelkreises ist und selbst feststellen kann, ob und wann die gewünschte Position erreicht ist. Welche akustischen Signale im einzelnen benutzt werden, ist unerheblich, solange sie von der elektronischen Steuereinrichtung unterscheidbar sind. Denkbar wären akustische Signale in Form von mehr oder weniger lang ausgesprochenen Vokalen für die verschiedenen Änderungsmöglichkeiten des Sitzes. Fortschrittliche Spracherkennungssysteme sind allerdings auch in der Lage, normal- und umgangssprachlich formulierte Sätze zu analysieren und die darin enthaltenen Stellbefehle zu erkennen. Letztlich wird es eine Frage des Komforts und des Preises sein, ob man mit einem einfacheren oder komplexeren Spracherkennungssystem arbeiten will.

## Patentansprüche

Zweckmäßigerweise ist die Einrichtung so konzipiert, daß sie nur durch ein dem Berechtigten bekanntes oder nur von ihm erzeugbares akustisches Signal aktivierbar ist, damit eine Veränderung der Sitzposition durch Dritte ausgeschlossen werden kann. Ferner ist vorgesehen, daß das Programm zur Erkennung und Verarbeitung akustischer Signale abgeschaltet wird, sobald die Zündung für den Fahrzeugmotor eingeschaltet wird, damit eine Sitzverstellung während der Fahrt ausgeschlossen wird, die andernfalls durch eine Unterhaltung im Fahrzeug ausgelöst werden könnte, aus der die elektronische Steuervorrichtung über das Mikrophon einen akustischen Stellbefehl herauslesen könnte.

Das Programm für die Erkennung und Verarbeitung von akustischen Signalen kann für eine oder mehrere Sprachen eingerichtet werden. Außerdem ist es möglich, das Programm auf eine begrenzte Anzahl von akustischen Eingangsbefehlen zu beschränken. Andererseits kann die Einrichtung auch so konzipiert werden, daß von ihr aus sowohl der Fahrersitz wie auch der Beifahrersitz verstellbar ist. Dabei werden zweckmäßigerweise zwei unterschiedliche akustische Signale zur Aktivierung der Programme für den Fahrersitz bzw. Beifahrersitz vorgesehen. Für diesen Zweck kann beispielsweise ein Frequenzanalysator eingesetzt werden.

1. Einrichtung zur Veränderung der Positionen eines in einem Fahrzeug angeordneten Sitzes mit einer Eingabeeinheit, einer elektronischen Steuervorrichtung sowie mit einem oder mehreren Stellantrieben, wobei die eingegebenen Befehle von der Steuervorrichtung in Ansteuersignale für die Stellantriebe umgewandelt werden, dadurch gekennzeichnet, daß die Eingabeeinheit ein Mikrophon ist und daß die Steuervorrichtung ein Programm zur Erkennung und Verarbeitung akustischer Signale umfaßt.

2. Einrichtung nach Anspruch 1, dadurch gekennzeichnet, daß das Programm durch ein nur dem Berechtigten bekanntes oder nur von ihm erzeugbares akustisches Signal aktivierbar ist.

3. Einrichtung nach Anspruch 1 oder 2, dadurch gekennzeichnet, daß das Programm bei eingeschalteter Zündung für den Fahrzeugmotor abgeschaltet ist.

4. Einrichtung nach einem der Ansprüche 1 bis 3, dadurch gekennzeichnet, daß das Programm für die Erkennung und Verarbeitung akustischer Signale für zwei oder mehrere Sprachen eingerichtet ist.

5. Einrichtung nach einem der Ansprüche 1 bis 4, dadurch gekennzeichnet, daß das Programm für eine begrenzte Anzahl akustischer Eingangsbefehle eingerichtet ist.

6. Einrichtung nach einem der Ansprüche 1 bis 5, dadurch gekennzeichnet, daß sie zur Veränderung der Position des Fahrersitzes und des Beifahrersitzes eingerichtet ist.

7. Einrichtung nach Anspruch 6, dadurch gekennzeichnet, daß zwei unterschiedliche Signale zur Aktivierung des Programms für den Fahrersitz bzw. Beifahrersitz vorgesehen sind.

8. Einrichtung nach einem der Ansprüche 1 bis 7, dadurch gekennzeichnet, daß die Signale zur Aktivierung des Programms mittels eines Frequenzanalysators kontrollierbar sind.
